# EUROPÄISCHE PATENTSCHRIFT

(11) **EP 0 831 001 B1**
(45) Veröffentlichungstag und Bekanntmachung des Hinweises auf die Patenterteilung: **05.12.2001**
(21) Anmeldenummer: 97116261.5
(22) Anmeldetag: 18.09.1997
(51) Int. Cl.: B61D 3/08, B62D 33/02

(54) **Hängerunge**
Stanchion for a tarpaulin
Rancher pour une bache

(30) Priorität: 19.09.1996 DE 29616344 U
(43) Veröffentlichungstag der Anmeldung: 25.03.1998
(73) Patentinhaber: F. HESTERBERG & SÖHNE GmbH & Co. KG, D-58256 Ennepetal (DE)
(72) Erfinder: Feinbier, Joachim, 58256 Ennepetal (DE); Nieland, Friedhelm, 58339 Breckerfeld (DE)
(74) Vertreter: Kneissl, Richard, Dr.

(56) Entgegenhaltungen:
- EP-A- 0 335 427
- EP-A- 0 426 484
- WO-A-92/00868
- WO-A-92/00869
- DE-U- 9 216 912
- FR-A- 2 667 283

## Beschreibung

Die Erfindung betrifft eine Hängerunge für Lastfahrzeuge gemäß dem Oberbegriff des Anspruchs 1. Hängerungen dieser Art, welche im Fachjargon auch als Curtain Sider-Rungen bezeichnet werden, sind beispielsweise aus der EP 335 427 A2 und der EP 426 484 A2 bekannt Sie können mit Hilfe der Befestigungsvorrichtung vom Fahrzeugrahmen gelöst und mit Hilfe der Rollenanordnung zur Seite geschoben werden, um das Be- und Entladen des Fahrzeugs zu erleichtern. Die Schiene, auf welcher die Rollenanordung läuft, bildet üblicherweise einen Teil eines Planengestells für das Fahrzeug.

Bei den bekannten Hängerungen ist es von Nachteil, daß ihre Befestigungsvorrichtung, mit deren Hilfe sie am Fahrzeugrahmen verriegelbar sind, keine spielfreie Festlegung der Runge am Fahrzeugrahmen gestattet, was angesichts der Tatsache, daß die Runge an ihrer Oberseite mittels des Wagens auf der Schiene hin- und herrollen kann, zu einem Ausschlagen des Mechanismus und einer Geräuschentwicklung führen kann.

Der Erfindung lag die Aufgabe zugrunde, die im Oberbegriff des Anspruchs 1 beschriebene Hängerunge derart zu verbessern, daß sie nicht die geschilderten Nachteile aufweist.

Die Lösung dieser Aufgabe ergibt sich aus dem Kennzeichen des Anspruchs 1 sowie den bevorzugten Weiterbildungen der Ansprüche 2 bis 10.

Der erfindungsgemäß vorgesehene Schieberiegel, der in der Verriegelungsstellung in eine Tasche an der Rungenaufnahme eingreift, ermöglicht eine spielfreie Befestigung der erfindungsgemäßen Hängerunge am Fahrzeugrahmen. Beim Verriegeln der Runge am Fahrzeugrahmen wird zunächst in an sich bekannter Weise der Rundstab am Schwenkglied in die oben offene Lagerhalbschale an der Rungenaufnahme eingehängt, worauf der Betätigungshebel geschlossen wird, bis er in die dafür vorgesehen Ausnehmung an der Vorderseite der Runge liegt. Dann wird mit Hilfe des bei geschlossenem Betätigungshebel erreichbaren Antriebsmechanismus der Riegel in die Tasche an der Rungenaufnahme geschoben.

Die Erfindung wird nachstehend an einer speziellen Ausführungsform anhand der beigefügten Zeichnungen näher erläutert.

In den Zeichnungen zeigen:
- Fig. 1: eine Ansicht des unteren Teils der erfindungsgemäßen Hängerunge;
- Fig. 2: eine detaillierte Aufsicht auf die Befestigungsvorrichtung in geschlossenem Zustand;
- Fig. 3: einen Schnitt an der Linie I-I von Fig. 2;
- Fig. 4: ebenfalls einen Schnitt an der Linie I-I, wobei die einzelnen Teile in geöffnetem Zustand dargestellt sind;
- Fig. 5: ein Detail im Bereich der Verriegelungsvorrichtung; und
- Fig. 6: das Detail von Fig. 5, jedoch mit anderer Lage der beweglichen Teile.

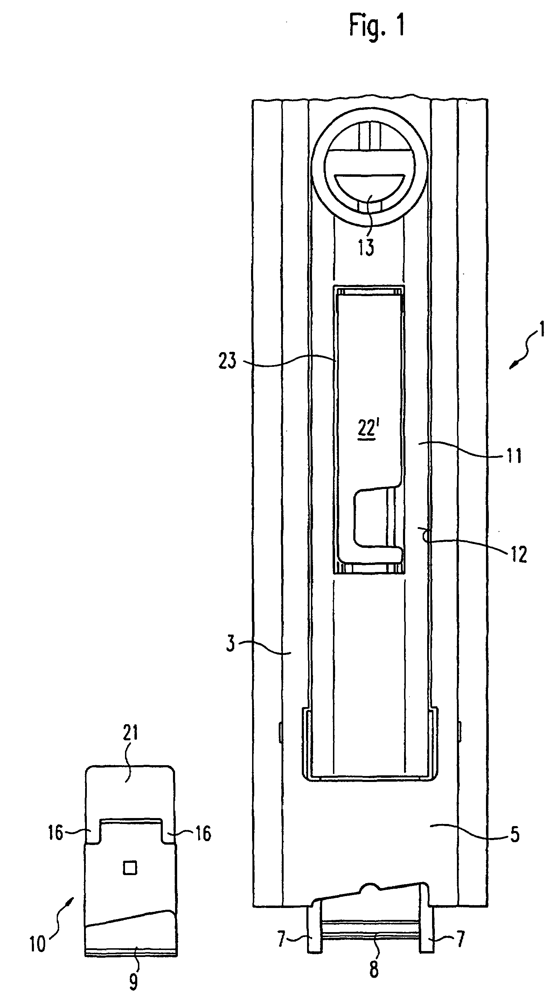

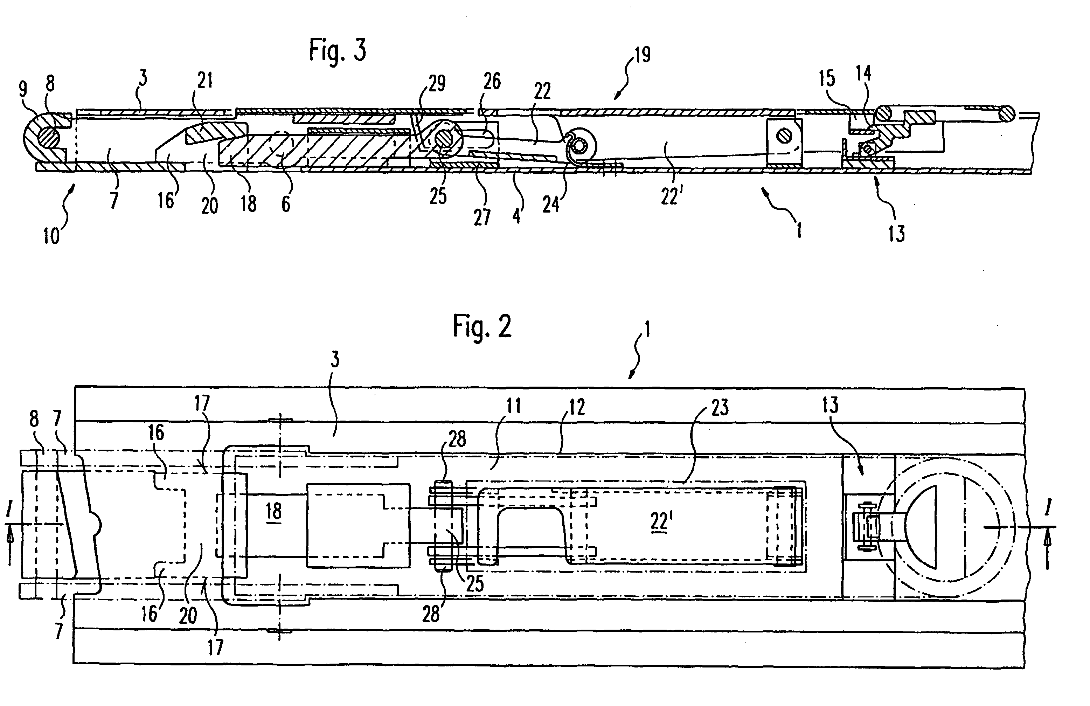

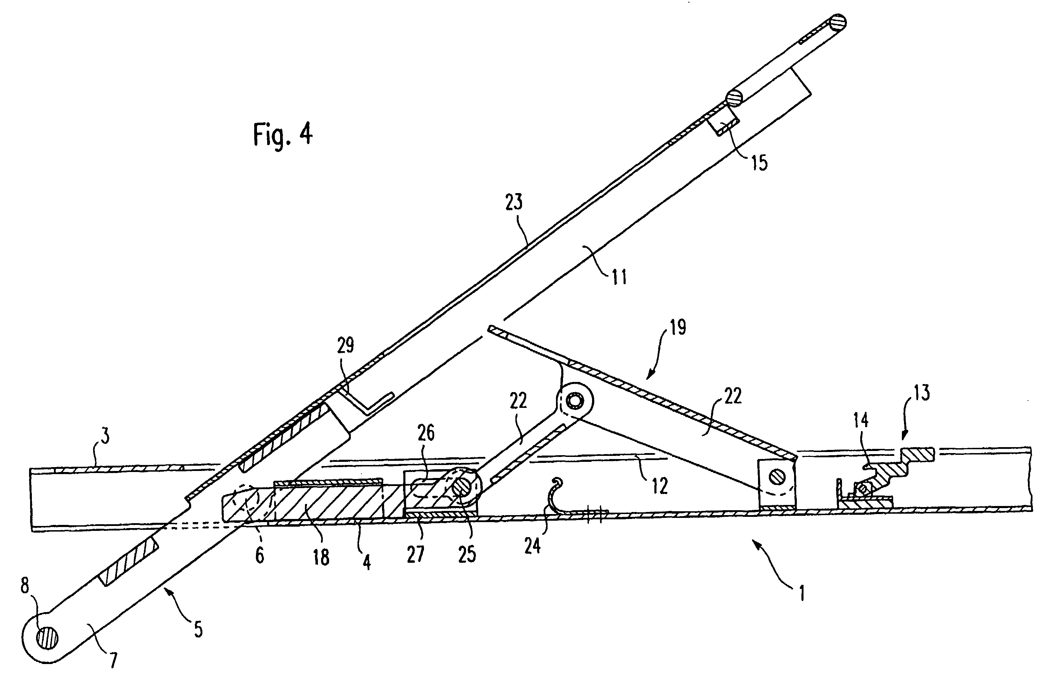

Gemäß den Fig. 1 bis 4 besitzt eine Hängerunge 1, von der nur der untere Teil dargestellt ist, da der obere Teil eine übliche Bauart aufweist, einen vertikalen Körper, der aus einem Hutprofil 3 besteht, das im unteren Bereich eine Abdeckplatte 4 aufweist. Im unteren Bereich des Hutprofils 3 und unterhalb der Abdeckplatte 4 ist ein Schwenkglied 5 mittels zweier in den Seitenwangen des Hutprofils 3 befestigter Stummelachsen 6 gelagert. Das Schwenkglied 5 ist an seiner Unterseite gabelförmig ausgebildet und trägt mittels der dadurch gebildeten Gabelzinken 7 einen Rundstab 8, der in eine oben offene Lagerhalbschale 9 einer am Fahrzeugrahmen anzubringenden Rungenaufnahme 10 einführbar ist. Das Schwenkglied 5 geht jenseits der Stummelachsen 6 in einen Betätigungshebel 11 über, welcher bei eingeschwenkter Lage des Schwenkglieds 5 in einer länglichen Ausnehmung 12 der Runge 1 liegt. Der Betätigungshebel 11 wird durch eine übliche Verriegelungsvorrichtung 13 in der eingeschwenkten Lage niedergehalten.

Zum Lösen der Runge 1 aus der Rungenaufnahme 10 wird die Verriegelungsvorrichtung 13 entriegelt, worauf durch Ausschwenken des Betätigungshebels 11 das Schwenkglied 5 aus der Lagerhalbschale 9 herausgeführt wird, wobei die Runge 1 selbst etwas nach außen schwenkt. Sie kann dann bequem zur Seite geschoben werden. Dadurch, daß es bei der erfindungsgemäßen Hängerunge nötig ist, den Betätigungshebel 11 zu erfassen und in der Hand zu halten, kann man einem plötzlichem Ausknicken des durch die Runge 1 und das Schwenkglied 5 gebildeten Kniehebel bei einer unter Spannung stehenden Runge 1 entgegenwirken, so daß es nicht zu dem erwähnten schlagartigen Einknicken kommen kann. Dies gilt insbesondere dann, wenn, wie bei der dargestellten Ausführungsform, der Betätigungshebel 11 gegenüber dem Schwenkglied 5 verhältnismäßig lang ausgebildet ist.

Die Verriegelungsvorrichtung 13 besitzt bei der dargestellten Ausführungsform einen durch Federdruck ausrückbaren Verschlußhaken 14, der in der Verriegelungsstellung in einen Bügel 15 am Betätigungshebel 11 eingreift. Dadurch, daß bei der dargestellten Ausführungsform die Verriegelungsvorrichtung 13 im Bereich des Betätigungshebels 11 vorgesehen ist, wird eine bequeme Einhandbedienung ermöglicht.

Zur spielfreien Befestigung der Hängerunge am Fahrzeugrahmen sind auf der Rungenaufnahme 10 zwei Ansätze 16 vorgesehen, die in der eingeschwenkten Lage des Schwenkglieds 5 an einander gegenüberliegenden Anlageflächen 17 des Schwenkglieds 5 anliegen.

Zur weiteren Versteifung zwischen Runge 1 und Rungenaufnahme 10 ist in der Runge ein vertikal geführter Schieberiegel 18 angeordnet, der mittels eines Antriebsmechanismus 19 in eine Tasche 20 an der Rungeaufnahme 10 einführbar ist. Die Tasche 20 ist dadurch gebildet, daß die beiden Ansätze 16 mittels einer Überbrückung 21 verbunden sind.

Der Antriebsmechanismus 19 für den Schieberiegel 18 besteht aus einem Kniehebel 22, 22', der einerseits an der Runge 1 und andererseits am Schieberiegel 18 abgestützt ist und der durch eine Öffnung 23 im Betätigungshebel 11 zugänglich ist. Der Antriebsmechanismus 19 ist in der Schließstellung durch eine Einrastfeder 24 gesichert.

Der Antriebsmechanismus 19 kann ein Federglied aufweisen, das in der Schließstellung den Schieberiegel 18 in die Tasche 20 drückt (nicht dargestellt). Ein solches Federglied ist üblicher Bauart und wirkt normalerweise auf eine der Anlenkachsen des Kniehebels 22, 22', die dann in Längsschlitzen verschieblich geführt ist.

Die riegelseitige Anlenkachse 25 des Kniehebelgliedes 22 ist in Längsschlitzen 26 geführt, die in den Wangen eines U-förmigen Bügels 27 ausgebildet sind, der seinerseits auf der Abdeckplatte 4 befestigt ist. Die Anlenkachse 25 ragt an beiden Seiten über die Längsschlitze 26 hinaus. Diese dadurch gebildeten Fortsätze 28 greifen in der Schließstellung unter Haken 29, so daß der Betätigungshebel 11 nicht geöffnet werden kann, wenn sich der Kniehebel 22, 22' in gestreckter Lage befindet.

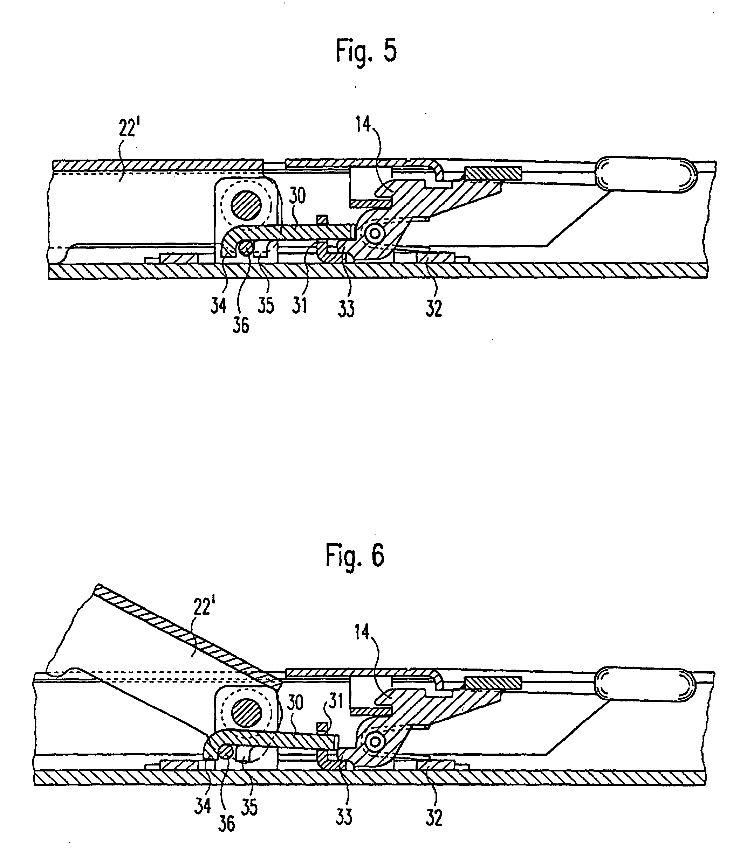

Eine andere mögliche Blockiereinrichtung für den Betätigungshebel 11 ist in den Fig. 5 und 6 dargestellt. Sie besteht aus einer Schubstange 30, die durch ein Rechteckloch 31 in der Halterung 32 für den Verschlußhaken 14 hindurchgeführt ist. Mit einem Ende ist die Schubstange 30 am Kniehebelglied 22' angelenkt. Hierzu weist sie zwei Vorsprünge 34, 35 auf, mit denen sie an einer am Kniehebelglied 22' angebrachte Rundstange 36 festgelegt ist. Mit dem anderen Ende übergreift sie (Fig. 5) eine Nase 33 am Verschlußhaken 14, so daß dieser nicht niedergedrückt werden kann. Wenn jedoch das Kniehebelglied 22' herausgeschwenkt wird, zieht sich die Schubstange 30 zurück und gibt den Verschlußhaken frei.

## Patentansprüche

1. Hängerunge (1) für Lastfahrzeuge, mit einer Rollenanordnung an ihrer Oberseite, mit deren Hilfe sie auf einer über der Seitenkante des Fahrzeugs angeordneten Schiene seitlich verschiebbar ist, und mit einer Befestigungsvorrichtung an ihrer Unterseite, mit deren Hilfe sie am Fahrzeugrahmen verriegelbar ist, wobei die Befestigungsvorrichtung eine am Fahrzeugrahmen anzubringende Rungenaufnahme (10) mit oben offener Lagerhalbschale (9) aufweist, die einen quer verlaufenden Rundstab (8) eines in der Runge (1) um eine horizontale Achse (6) angelenkten Schwenkglieds (5) mit einem daran befestigten Betätigungshebel (11) aufnimmt, wobei der Betätigungshebel (11) mit dem Schwenkglied (5) einen gestreckten zweiarmigen Drehriegel bildet und in der eingeschwenkten Lage in einer Ausnehmung (12) an der Vorderseite der Runge (1) liegt, sowie mit einer Verriegelungsvorrichtung (13), mit deren Hilfe das Schwenkglied (5) in der in der Runge (1) eingeschwenkten Lage festlegbar ist, **dadurch gekennzeichnet, daß** in der Runge (1) ein vertikal geführter Schieberiegel (18) angeordnet ist, der mittels eines bei geschlossenen Betätigungshebel (11) zugänglichen Antriebsmechanismus (19) in eine Tasche (20) an der Rungenaufnahme (10) einführbar ist.

2. Hängerunge nach Anspruch 1, **dadurch gekennzeichnet, daß** die Verriegelungsvorrichtung (13) am Betätiungshebel (11) des Schwenkglieds (5) angreift und einen gegen Federdruck ausrückbaren Verschlußhaken (14) aufweist.

3. Hängerunge nach Anspruch 1 oder 2, **dadurch gekennzeichnet, daß** die Rungenaufnahme (10) im Bereich oberhalb des Rundstabs (8) zwei Ansätze (16) aufweist, die in der eingeschwenkten Lage des Schwenkglieds (5) an einander gegenüberliegenden Anlageflächen (17) desselben anliegen.

4. Hängerunge nach Anspruch 3, **dadurch gekennzeichnet, daß** die Tasche (20) an der Rungenaufnahme (10) aus einer Überbrückung (21) der Ansätze (16) an der Rungenaufnahme (10) gebildet ist.

5. Hängerunge nach einem der vorhergehenden Ansprüche, **dadurch gekennzeichnet, daß** der Antriebsmechanismus (19) für den Schieberiegel (18) aus einem Kniehebel (22,22') besteht, der einerseits an der Runge (1) und andererseits am Schieberiegel (18) abgestützt ist und der durch eine Öffnung (23) im Betätigungshebel (11) des Schwenkglieds (5) zugänglich ist.

6. Hängerunge nach einem der vorhergehenden Ansprüche, **dadurch gekennzeichnet, daß** der Antriebsmechanismus (19) ein Federglied aufweist, das den Schieberiegel (18) in der Schließstellung in die Tasche (20) drückt.

7. Hängerunge nach einem der vorhergehenden Ansprüche, **dadurch gekennzeichnet, daß** der Antriebsmechanismus (19) in der Schließstellung durch eine Einrastfeder (24) gesichert ist.

8. Hängerunge nach einem der vorhergehenden Ansprüche, **dadurch gekennzeichnet, daß** am Schieberiegel (18) oder dessen Antriebsmechanismus (19) ein Sperrglied (28,30) vorgesehen ist, das in der Schließstellung des Betätigungshebels (11) und des Antriebsmechanismus (19) auf einen Gegenhalter (29,33) wirkt, derart, daß bei geschlossenem Antriebsmechanismus (19) der Betätigungshebel (11) nicht ausgeschwenkt werden kann.

9. Hängerunge nach den Ansprüchen 5 und 8, **dadurch gekennzeichnet, daß** das Sperrglied aus mindestens einem Fortsatz (28) der riegelseitigen Anlenkachse (25) des Kniehebelglieds (22) und der Gegenhalter aus einem Haken (29) am Betätigungshebel (11) besteht.

10. Hängerunge nach den Ansprüchen 2, 5 und 8, **dadurch gekennzeichnet, daß** das Sperrglied aus einer Schubstange (30) besteht, die durch ein Loch (31) in der Halterung (32) für den Verschlußhaken (14) hindurchgeführt ist und außerdem mit einem Ende am benachbarten Kniehehebelglied (22') derart angelenkt ist, daß sie mit dem anderen Ende in der gestreckten Lage des Kniehebels (22,22') über eine Nase (33) am Verschlußhaken (14) greift und dabei das Niederdrücken des Verschlußhakens (14) blockiert.

## Claims

1. Suspension post (1) for heavy goods vehicles, having a roller arrangement on its top side, with the aid of which it can be displaced laterally on a rail arranged above the side edge of the vehicle, and having a fastening device on its underside, with the aid of which it can be locked on the vehicle frame, it being the case that the fastening device has a post mount (10) which is to be fitted on the vehicle frame and has a bearing half-shell (9) which is open at the top and accommodates a transversely running round bar (8) of a pivoting element (5), which is articulated in the post (1) around a horizontal pin (6) and has an actuating lever (11) fastened on it, it being the case that the actuating lever (11), with the pivoting element (5), forms a straightened-out two-armed hasp-type catch and, in the pivoted-in position, is located in a recess (12) on the front side of the post (1), and having a locking device (13), with the aid of which the pivoting element (5) can be secured in the position in which it has been pivoted into the post (1), **characterized in that** arranged in the post (1) is a vertically guided sliding catch (18) which can be introduced into a pocket (20) on the post mount (10) by means of a drive mechanism (19), which is accessible when the actuating lever (11) has been closed.

2. Suspension post according to Claim 1, **characterized in that** the locking device (13) acts on the actuating lever (11) of the pivoting element (5) and has a closure hook (14) which can be disengaged counter to spring pressure.

3. Suspension post according to Claim 1 or 2, **characterized in that** the post mount (10), in the region above the round bar (8), has two extensions (16) which, in the pivoted-in position of the pivoting element (5), butt against mutually opposite abutment surfaces (17) of the same.

4. Suspension post according to Claim 3, **characterized in that** the pocket (20) on the post mount (10) is formed from a bridging piece (21) between the extensions (16) on the post mount (10).

5. Suspension post according to one of the preceding claims, **characterized in that** the drive mechanism (19) for the sliding catch (18) comprises a toggle lever (22, 22') which is supported, on the one hand, on the post (1) and, on the other hand, on the sliding catch (18) and is accessible through an opening (23) in the actuating lever (11) of the pivoting element (5).

6. Suspension post according to one of the preceding claims, **characterized in that** the drive mechanism (19) has a spring element which forces the sliding catch (18) into the pocket (20) in the closed position.

7. Suspension post according to one of the preceding claims, **characterized in that** the drive mechanism (19) is secured by a latch-in spring (24) in the closed position.

8. Suspension post according to one of the preceding claims, **characterized in that** a blocking element (28, 30) is provided on the sliding catch (18) or the drive mechanism (19) thereof, said blocking element acting on an abutment (29, 33) in the closed position of the actuating lever (11) and of the drive mechanism (19) such that the actuating lever (11) cannot be pivoted out when the drive mechanism (19) has been closed.

9. Suspension post according to Claims 5 and 8, **characterized in that** the blocking element comprises at least one continuation (28) of the catch-side articulation pin (25) of the toggle-lever element (22), and the abutment comprises a hook (29) on the actuating lever (11).

10. Suspension post according to Claims 2, 5 and 8, **characterized in that** the blocking element comprises a push rod (30) which is guided through a hole (31) in the securing means (32) for the closure hook (14) and, moreover, is articulated, by one end, on the adjacent toggle-lever element (22') such that, in the straightened-out position of the toggle lever (22, 22'), it engages, by its other end, over a nose (33) on the closure hook (14) and thus blocks the pressing-down action of the closure hook (14).

## Revendications

1. Rancher pendant (1) pour camions, avec sur le haut un dispositif à galets à l'aide duquel il peut être déplacé latéralement sur une glissière montée au-dessus du bord latéral du véhicule, et avec un dispositif de fixation sur le dessous, à l'aide duquel il peut être verrouillé sur le châssis du véhicule, ce dispositif de fixation possédant un logement du rancher (10) à monter sur le châssis du véhicule, avec un demi-coussinet de palier (9) ouvert vers le haut et qui reçoit une barre cylindrique transversale (8) d'un élément pivotant (5) articulé dans le rancher (1) sur un axe horizontal (6), avec un levier d'actionnement (11) fixé dessus, ce levier d'actionnement (11) formant avec l'élément pivotant (5) un verrou pivotant à deux bras prolongé et se trouvant, en position prise par pivotement, dans une rainure (12) du côté avant du rancher (1), ainsi qu'avec un dispositif de verrouillage (13) à l'aide duquel il est possible d'immobiliser l'élément pivotant (5) dans la position dans laquelle il se trouve dans le rancher (1) après pivotement, **caractérisé en ce qu'**un verrou coulissant (18) guidé verticalement est placé dans le rancher (1) et peut être introduit dans un réceptacle (20), sur le logement du rancher (10), au moyen d'un mécanisme d'entraînement (19) qui est accessible quand le levier d'actionnement (11) est fermé.

2. Rancher pendant selon la première revendication, **caractérisé en ce que** le dispositif de verrouillage (13) agit sur le levier d'actionnement (11) de l'élément pivotant (5) et possède un crochet de fermeture (14) pouvant être sorti en surmontant la force antagoniste d'un ressort.

3. Rancher pendant selon la revendication 1 ou 2, **caractérisé en ce que** le logement du rancher (10) présente, dans sa partie située au-dessus de la barre cylindrique (8), deux saillies (16) qui, lorsque l'élément pivotant (5) est en position rentrée par pivotement, sont en contact avec des surfaces d'appui (17) situées l'une en face de l'autre.

4. Rancher pendant selon la revendication 3, **caractérisé en ce que** le réceptacle (20), sur le logement du rancher (10), est constitué par une jonction (21) des saillies (16) que possède le logement du rancher (10).

5. Rancher pendant selon l'une des revendications précédentes, **caractérisé en ce que** le mécanisme d'entraînement (19) du verrou coulissant (18) est constitué par un levier à genouillère (22, 22') qui s'appuie d'une part sur le rancher (1) et, d'autre part, sur le verrou coulissant (18) et qui est accessible par une ouverture (23) du levier d'actionnement (11) de l'élément pivotant (5).

6. Rancher pendant selon l'une des revendications précédentes, **caractérisé en ce que** le mécanisme d'entraînement (19) possède un élément constitué par un ressort qui, en position fermée, pousse le verrou coulissant (18) dans le réceptacle (20).

7. Rancher pendant selon l'une des revendications précédentes, **caractérisé en ce que** le mécanisme d'entraînement (19) est bloqué, en position fermée, par un ressort à encliquetage (24).

8. Rancher pendant selon l'une des revendications précédentes, **caractérisé en ce qu'**un élément de blocage (28, 30) se trouve sur le verrou coulissant (18) ou sur son mécanisme d'entraînement (19) et, dans la position de fermeture du levier d'actionnement (11) et du mécanisme d'entraînement (19), agit sur un contre-support (29, 33) de telle manière que, quand le mécanisme d'entraînement (19) est fermé, on ne puisse pas faire sortir le levier d'actionnement (11) en le fisant pivoter.

9. Rancher pendant selon les revendications 5 et 8, **caractérisé en ce que** l'élément de blocage est constitué par au moins un prolongement (28), du côté du verrouillage, de l'axe d'articulation (25) de l'élément (22) de la genouillère et le contre-support par un crochet (29) situé sur le levier d'actionnement (11).

10. Rancher pendant selon les revendications 2, 5 et 8, **caractérisé en ce que** l'élément de blocage est constitué par une tige de poussée (30) qui passe dans un trou (31) de la fixation (32) destinée au crochet de fermeture (14) et, en outre, est articulée, à l'une de ses extrémités, sur l'élément voisin (22') de la genouillère, de telle manière que, dans la position étendue de la genouillère articulée (22, 22'), elle agisse par l'autre extrémité sur le crochet de fermeture (14) par l'intermédiaire d'un bec (33) et bloque ainsi l'abaissement par poussée du crochet de fermeture (14).
